# EUROPÄISCHE PATENTANMELDUNG

(11) **EP 2 374 357 A1**
(43) Veröffentlichungstag der Anmeldung: **12.10.2011**
(21) Anmeldenummer: 11152725.5
(22) Anmeldetag: 31.01.2011
(51) Int. Cl.: A21C 9/04

(54) **Betätigungsvorrichtung für einen Dosiertrichter, Dosiertrichter und Handhabungssystem mit einem Dosiertrichter**

(30) Priorität: 08.04.2010 DE 202010004715 U
(71) Anmelder: Schneider GmbH, 73095 Albershausen (DE)
(72) Erfinder: Schneider, Jochen, 73732 Esslingen (DE)
(74) Vertreter: Kaufmann, Ursula Josefine

(57) **Zusammenfassung**

Die Erfindung geht aus von einer Betätigungsvorrichtung (10) für einen Dosier-Trichter (100), umfassend einen Handgriff (12) und einen Betätigungsmechanismus (20) mit einem Hebel (22) zum Öffnen und Schließen einer Ausgabeöffnung (14) des Dosier-Trichters (100).

Es wird vorgeschlagen, dass der Handgriff (12) an einem Ende einer lösbar mit dem Dosier-Trichter (100) verbindbaren Brücke (44) angeordnet ist, welche sich im montierten Zustand über den Dosier-Trichter erstreckt (100) und der Betätigungsmechanismus (20) an der Brücke (44) lösbar gelagert ist.

Ferner betrifft die Erfindung einen Dosier-Trichter sowie ein Handhabungssystem mit einem Dosier-Trichter.

## Beschreibung

### Stand der Technik

Die Erfindung betrifft eine Betätigungsvorrichtung für einen Dosier-Trichter, einen Dosier-Trichter und ein Handhabungssystem mit einem Dosier-Trichter nach den Oberbegriffen der unabhängigen Ansprüche.

Aus der GB 285 188 ist ein Trichter bekannt, mit dem eine Füllung dosiert beispielsweise in eine Mehrzahl von Gebäckstücken eingefüllt werden kann. Der Trichter weist im oberen Bereich einen Handgriff auf. Hält ein Anwender den Trichter am Handgriff fest, kann der Anwender mit seinem Daumen einen Hebel betätigen, der in Wirkverbindung mit einem Verschlussmittel am Boden des Trichters steht. Durch Betätigen des Hebels gibt das Verschlussmittel eine Öffnung im Boden des Trichters frei oder verschließt diese. So kann die Füllung dosiert abgegeben werden.

Der Erfindung liegt die Aufgabe zugrunde, eine Betätigungsvorrichtung für einen Dosier-Trichter zu schaffen, die auch bei längerer Handhabung angenehm zu bedienen ist. Weiterhin soll ein Dosier-Trichter geschaffen werden, der auch hohen Anforderungen bezüglich der Hygiene gerecht wird, sowie ein Handhabungssystem mit einem Dosier-Trichter, das ein sauberes Arbeiten auch mit einer tropfenden Füllung ermöglicht.

### Offenbarung der Erfindung

Die Erfindung geht aus von einer Betätigungsvorrichtung für einen Dosier-Trichter, umfassend einen Handgriff und einen Betätigungsmechanismus mit einem Hebel zum Öffnen und Schließen einer Ausgabeöffnung des Dosier-Trichters.

Es wird vorgeschlagen, dass der Handgriff an einem Ende einer lösbar mit dem Dosier-Trichter verbindbaren Brücke angeordnet ist, welche sich im montierten Zustand über den Dosier-Trichter erstreckt und der Betätigungsmechanismus an der Brücke lösbar lagerbar ist. Insbesondere kann der Handgriff fest mit der Brücke ausgebildet sein.

Der Dosier-Trichter ist insbesondere ein Likör- und Fondanttrichter oder Trüffelfüller, der als Hilfsgerät zum Einfüllen und Dosieren von flüssigen Produkten, wie Likören, Gelees, Soßen, Cremes, usw. verwendet werden kann. Zur Aufnahme der Masse dient der Trichterkörper, der aus Stoff, Metall oder Kunststoff gebildet sein kann. Der Dosier-Trichter ist am oberen Rand mit einer festen Konstruktion, der Betätigungsvorrichtung, verbunden, an der sowohl der Handgriff als auch der Betätigungsmechanismus, etwa eine Kippmechanik, angebracht ist, mit der die Unterseite des Dosier-Trichters, die Ausgabeöffnung, geöffnet oder geschlossen werden kann, um je nach Bedarf den Inhalt des Dosier-Trichters portionsweise zu verarbeiten.

Der Dosier-Trichter kann zur Reinigung komplett demontiert werden, womit ein sehr hygienisches Arbeiten möglich ist. Einzelteile wie die Brücke und der Betätigungsmechanismus können zur Reinigung, aber auch zur Wartung, ohne großen Aufwand werkzeuglos zerlegt werden.

Der Hebel ist an der Brücke schwenkbar gelagert, welche sich im montierten Zustand über einen oberen Bereich des Dosier-Trichters erstreckt. Vorteilhaft ist der Dosier-Trichter einhändig über Handgriff und Betätigungsmechanismus bedienbar.

Gemäß einer vorteilhaften Ausgestaltung kann der Betätigungsmechanismus einen Hebel umfassen, der auf ein Verschlussmittel einwirkt, welches die Ausgabeöffnung öffnet oder schließt, wobei der Hebel mit einem Rückstell-Federelement zusammenwirken kann. Der Betätigungsmechanismus kann aus einfachen und stabilen Komponenten zusammengefügt werden, die ein häufiges Montieren und Demontieren tolerieren.

Insbesondere kann das Rückstell-Federelement U-förmig ausgebildet sein, wobei das Federelement mit seinem Mittelteil um eine Welle eines Schwenklagers angeordnet sein und mit zwei Schenkeln zwischen Brücke und Hebel so angeordnet sein kann, dass der Hebel bei einer Bewegung des Hebels gegen die Federkraft der Schenkel bewegbar ist.

Gemäß einer vorteilhaften Ausgestaltung kann oberhalb eines oberen, zur Brücke gerichteten Endes des Handgriffs der Hebel angeordnet sein. Dieser kann daher bequem vom Anwender bedient werden, wenn dessen Hand den Handgriff umschließt.

Gemäß einer vorteilhaften Ausgestaltung kann der Handgriff ergonomisch ausgebildet sein und quer zu einer Trichterachse unter einem Winkel zwischen 10° und 80° geneigt ausgerichtet sein, insbesondere zwischen 20° und 70°. Der Handgriff kann an die Brücke angeformt oder angesetzt sein. Vorteilhaft kann der Handgriff aus Kunststoff gebildet sein. Insbesondere kann der Handgriff Griffmulden für Finger eines Anwenders aufweisen. Durch eine gerundete Form kann der Handgriff angenehm in der Hand des Anwenders liegen und eine griffsichere und rutschfeste Handhabung des Dosier-Trichters und der Betätigungsvorrichtung ermöglichen.

Durch die besondere Ausgestaltung des Handgriffs kann auch bei längerer Handhabung Ermüdungen und Schmerzen an Arm und Hand und bei längerer Anwendung Schäden an Arm und Hand, wie z.B. Sehnenscheidenentzündung, etc., vermieden werden. Dies ist insbesondere möglich, wenn der Dosier-Trichter gefüllt und ein schweres Gewicht zu bedienen ist. Art, Form und Material des Handgriffes sind daher entscheidend für eine leichtere und bequemere Handhabung des Dosier-Trichters. Mit der Erfindung wird einerseits erreicht, dass die Handhabung des Trichters wesentlich erleichtert wird, Hand und Arm entlastet werden und nicht so schnell ermüden. Gesundheitliche Schäden können vermieden werden.

Gemäß einer vorteilhaften Ausgestaltung kann die Brücke eine erste Öffnung und eine entfernte zweite Öffnung zum Verbinden mit dem Dosier-Trichter oder einer mit dem Dosiertrichter verbundenen separaten Auflage aufweisen. Insbesondere kann die erste Öffnung ein Schlüsselloch sein und die zweite Öffnung eine zu einer Seite der Brücke offene Nut. Dadurch kann die Brücke leicht mit dem Dosier-Trichter zusammengefügt werden und ebenso leicht wieder entfernt werden. Gleichzeitig ergibt sich eine stabile Lagerung der Brücke am Dosier-Trichter.

Gemäß einer vorteilhaften Ausgestaltung kann die Brücke wenigstens einen Stutzen zur Lagerung wenigstens einer Düse aufweisen. Dadurch können Zubehörteile Platz sparend am Gerät gelagert werden. Während des Betriebs können Düsen gewechselt werden, um so flüssige Produkte mit unterschiedlicher Viskosität verarbeiten zu können und um unterschiedliche Mengendosierungen einstellen zu können. Düsen mit unterschiedlichen Öffnungen können dabei auf der Brücke auf Stutzen gelagert werden, die zweckmäßigerweise mit Gewinde versehen sind. Auf diese Weise sind die Düsen verliersicher gelagert und jederzeit zum Einsatz in greifbarer Nähe. Die Düsen können z.B. verschiedene Durchmesser und/oder verschiedene Längen oder auch verschiedenartige, z.B. gezackte oder ebene Ränder aufweisen.

Gemäß einer vorteilhaften Ausgestaltung kann der Hebel eine Stange bewegen, an deren unterem Ende das Verschlussmittel angeordnet ist. Die Mechanik ist einfach zu bedienen und robust bei der Handhabung. Das Verschlussmittel kann eine Kugel sein, die an die Stange angeschraubt ist.

Gemäß einem weiteren Aspekt der Erfindung wird ein Dosier-Trichter vorgeschlagen mit einer Betätigungsvorrichtung, die wenigstens ein Merkmal wie vorstehend beschrieben aufweist. Die Betätigungsvorrichtung ist am oberen Bereich des Trichterkörpers gelagert und weist im unteren Bereich ein Verschlussmittel der Betätigungsvorrichtung auf, die eine Ausgabeöffnung des Dosier-Trichters öffnet oder schließt.

Der Trichterkörper kann aus Metall, Textil, insbesondere beschichtetes Textil, oder Kunststoff gebildet sein.

Gemäß einer vorteilhaften Ausgestaltung kann der Dosier-Trichter eine Auflage zur Verbindung der Betätigungsvorrichtung aufweisen, die mit dem Trichterkörper fest verbunden ist.

Gemäß einer vorteilhaften alternativen Ausgestaltung kann der Dosier-Trichter eine Auflage zur Verbindung der Betätigungsvorrichtung mit dem Trichterkörper aufweisen, welche lösbar mit dem Trichterkörper verbunden ist. Dies ist insbesondere günstig, wenn der Trichterkörper aus Textilmaterial gebildet ist.

Gemäß einer vorteilhaften Ausgestaltung kann der Dosier-Trichter ein Gewinde an der Ausgabeöffnung aufweisen, welches zum Anschrauben einer Düse angebracht ist. Die Düse kann leicht gewechselt werden. Im Falle eines Trichterkörpers aus Stoff kann die Düse auch in den Trichterkörper gesetzt werden und zur Ausgabeöffnung nach unten herausragen, wie dies bei üblichen Spritzbeuteln üblich ist. Gemäß einem weiteren Aspekt der Erfindung wird ein Handhabungssystem mit einem Dosier-Trichter vorgeschlagen, welcher wenigstens ein Merkmal wie vorstehend beschrieben aufweist. Ein Gestell ist zum Abstellen des Dosier-Trichters vorgesehen, wobei beim Abstellen des Dosier-Trichters in das Gestell eine Ausgabeöffnung des Dosier-Trichters über einer Abtropfschale positionierbar ist.

Es ist ein sauberes und hygienisches Arbeiten mit dem Dosier-Trichter möglich. Ein Verschmutzen der Arbeitsfläche mit dem Inhalt des Dosier-Trichters kann vermieden werden und die Handhabung mit dem Dosier-Trichter vereinfacht werden.

Normalerweise kann der Dosier-Trichter aufgrund seiner Form nicht abgestellt werden, da der Inhalt ausläuft, wenn der Dosier-Trichter abgelegt wird. Darüber hinaus bilden sich selbst bei geschlossener Trichteröffnung Flüssigkeitsreste, die den Arbeitsplatz oder andere Gegenstände verschmutzen können. Es wird vorteilhaft erreicht, dass der Dosier-Trichter während den Handhabungspausen schnell, leicht und stabil selbst bei einem geringen Platzangebot abgestellt werden kann.

Durch die Abtropfschale, die in das Gestell, insbesondere ein Metallgestell, eingelegt wird, wird der Arbeitsplatz vor Verschmutzung, etwa einem Nachtropfen des Trichters, geschützt. Die Abtropfschale ist leicht zu entnehmen und zu reinigen, bleibt jedoch stabil im Gestell, selbst wenn die Lage des Trichters verändert oder das gesamte Gestell verschoben wird.

Der Metallständer mit Abtropfschale kann aus Metall so geformt sein, dass er den Dosier-Trichter leicht und sicher aufnimmt und der Dosier-Trichter während der Handhabungspausen in dem Metallständer ohne zu kippen fest ruht, unabhängig von Art und Menge des Inhalts des Dosier-Trichters.

Am unteren Teil des Gestells ist die Abtropfschale, beispielsweise eine EdelstahlSchale, aufgenommen, die durch beispielsweise drei Metallstifte (Speichen), die von den beispielsweise drei Füßen des Gestells ausgehen, fest gehalten wird, ohne dass eine Verschraubung oder Verklammerung erforderlich ist. Eine Ausgestaltung des Gestells als Dreibein ist besonders stabil. Die Streben des Gestells können mit zwei Metallringen fest verbunden sein.

Gemäß einer vorteilhaften Ausgestaltung können Streben des Gestells sich nach oben erstrecken und ihren gegenseitigen Abstand nach außen vergrößern, so dass der Dosier-Trichter in diesem Bereich des Gestells von den Streben stützbar ist. Vorteilhaft kann die Abtropfschale auf Speichen des Gestells ablegbar sein.

Die Betätigungsvorrichtung, die nur über die Flügelschraube und den Pilzzapfen mit dem eigentlichen Dosier-Trichter verbunden ist, kann komplett demontiert werden. Die Stange zur Betätigung der Ausgabeöffnung kann beispielsweise über eine Hutmutter mit dem Hebel des Betätigungsmechanismus verbunden sein und kann dadurch leicht von diesem gelöst werden. Die Düse der Ausgabeöffnung kann über ein Gewinde verschraubt sein und dadurch ebenfalls leicht lösbar und austauschbar sein. Durch die modulare und leicht demontierbare Bauweise der Betätigungsvorrichtung des Dosier-Trichters kann dieser beispielsweise für Reinigungszwecke komplett demontiert werden. Ebenso können zusätzliche Düsen als Ersatz oder um andere flüssige Produkte in anderen Einsatzbereichen zu verarbeiten, montiert werden. Das System ist so leicht erweiterbar. Für Servicezwecke sind auch einzelne Bauteile ohne großen Aufwand zu ersetzen.

### Zeichnung

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Gesamtansicht eines Ausführungsbeispiels eines Handhabungssystems mit einem Dosier-Trichter mit einer Betätigungsvorrichtung inklusive eines Gestells zum Abstellen des Dosier-Trichters,
- Fig. 2a: eine Draufsicht auf die Betätigungsvorrichtung für den Dosier-Trichter aus Fig. 1
- Fig. 2b: eine Seitenansicht der Betätigungsvorrichtung für den Dosier-Trichter aus Fig. 1,
- Fig. 2c: einen Ausschnitt aus der Seitenansicht der Betätigungsvorrichtung für den Dosier-Trichter aus Fig. 1 mit einer Schnittdarstellung durch ein Rückstell-Federelement,
- Fig. 3: eine Draufsicht auf den Dosier-Trichter aus Fig. 1,
- Fig. 4: eine Gesamtansicht des Gestells zum Abstellen des Dosier-Trichters inklusive einer Abtropfschale aus Fig. 1,
- Fig. 5: einen Schnitt durch ein Verschlussmittel des Dosier-Trichters aus Fig. 1, welches eine Ausgabeöffnung öffnet und schließt.

### Ausführungsform der Erfindung

In den Figuren sind gleiche oder gleichartige Komponenten mit gleichen Bezugszeichen beziffert.

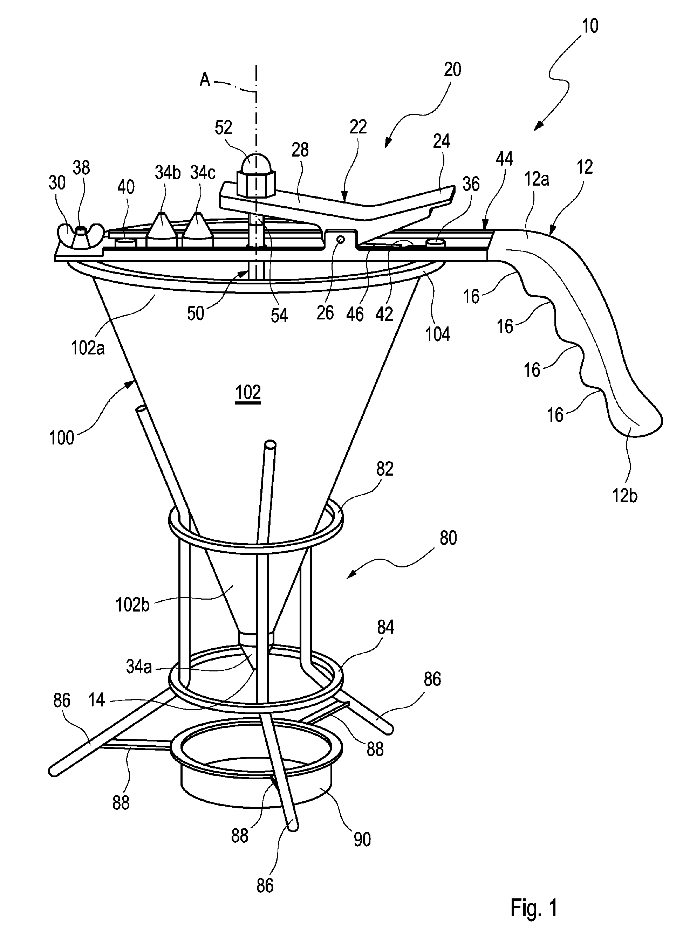

Figur 1 stellt eine Gesamtansicht eines Handhabungssystems mit einem Dosier-Trichter 100 inklusive eines Gestells 80 zum Abstellen des Dosier-Trichters 100 dar. Das Handhabungssystem besteht aus dem eigentlichen Dosier-Trichter 100, sowie der Betätigungsvorrichtung 10 und kann auf dem Gestell 80 abgestellt werden.

Ein Trichterkörper 102 des Dosier-Trichters 100 wird von einem konischen Bereich gebildet, der einen unteren Bereich 102b umfasst, in dem auch eine Ausgabeöffnung 14 mit einer Düse 34a angeordnet ist. Weiter umfasst der Dosier-Trichter 100 einen oberen Bereich 102a, der durch eine Auflage 104, die wahlweise fest mit dem konischen Bereich des Trichterkörpers 102 verbunden sein kann, abgeschlossen wird. Die Auflage 104 dient dazu, die Betätigungsvorrichtung 10 aufzunehmen, die mit der Auflage 104 beispielsweise verschraubt sein kann.

Das gesamte Handhabungssystem mit dem Dosier-Trichter 100 kann über eine Betätigungsvorrichtung 10 bedient und gehalten werden, indem ein ergonomisch geformte Handgriff 12 mit einer Hand zwischen dem oberen Ende 12a des Handgriffs 12 und dem unteren Ende 12b des Handgriffs 12 fest umfasst wird. Dabei dienen Griffmulden 16 im Handgriff 12 für einen festen und rutschsicheren Halt. Der Handgriff 12 ist in einem Bauteil integriert, welches neben dem Handgriff 12 eine Brücke 44 umfasst, die sich zumindest im Gebrauchszustand über den oberen Trichterbereich 102a erstreckt. Die Brücke 44 mit dem Handgriff 12 ist lösbar mit dem Dosier-Trichter 100 verbunden.

In Figur 1 ist das gesamte Handhabungssystem mit dem Dosier-Trichter 100 in einem Gestell 80 abgestellt, um den Dosier-Trichter 100 beispielsweise vor der Benutzung mit der gewünschten Masse zu befüllen sowie während oder nach der Benutzung kippsicher und ohne die Arbeitsumgebung zu verschmutzen abzustellen.

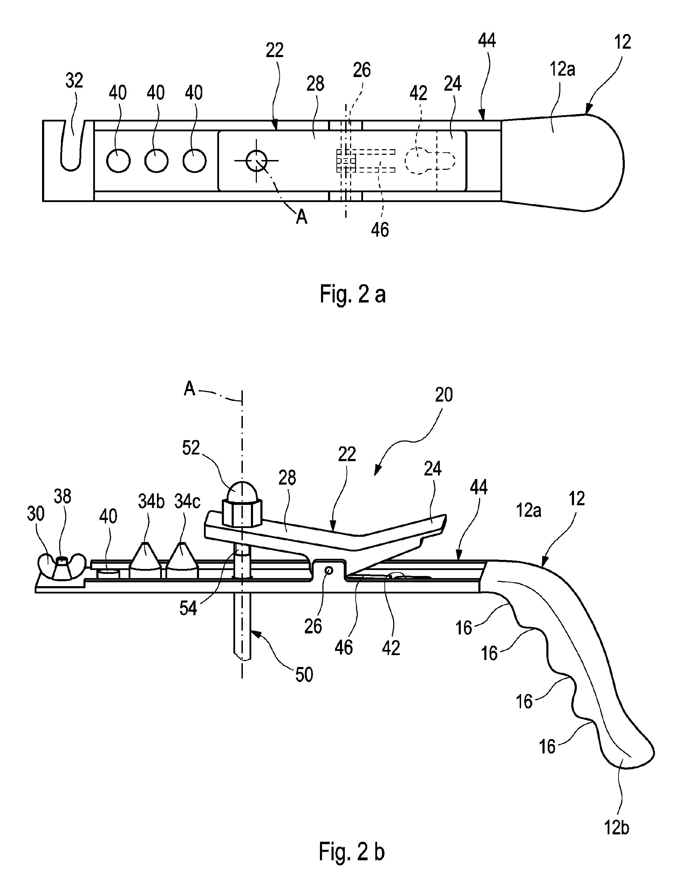

Figur 2a zeigt eine Draufsicht auf eine Betätigungsvorrichtung 10 für den Dosier-Trichter 100 aus Figur 1, in der zwei Öffnungen 32, 42 in der Brücke 44 zur Befestigung der Betätigungsvorrichtung 10 auf der Auflage 104 des Dosier-Trichters 100 zu sehen sind. Dabei dient die erste Öffnung 32 dazu, einen Gewindezapfen 38, der mit der Auflage 104 fest verbunden ist, aufzunehmen, während die zweite Öffnung 42 dazu dient, die Betätigungsvorrichtung 10 mit einem Pilzzapfen 36, der mit der Auflage 104 fest verbunden ist, zu fixieren. Bei der Montage wird die Betätigungsvorrichtung 10 mit dem als Schlüsselloch ausgebildeten zweiten Öffnung 42 erst über den Pilzzapfen 36 gesetzt, verrastet, anschließend so gedreht, dass der Gewindezapfen 38 aufgenommen wird. Die Brücke 44 kann dann mit einer Flügelschraube 30 zur sicheren Befestigung der Betätigungsvorrichtung 10 fixiert werden.

Weiter zeigt die Draufsicht, wie der Hebel 22 des Betätigungsmechanismus 20 über ein Schwenklager 26 drehbar mit der Brücke 44 verbunden ist. Außerdem sind auf der Brücke 44 mehrere Stutzen 40 angebracht, die beispielsweise jeweils mit einem Gewinde versehen sein können, die dazu dienen, verschiedene Düsen 34a, 34b, 34c mit beispielsweise unterschiedlich großen Düsenöffnungen fest und verliersicher aufzunehmen.

Figur 2b zeigt eine Seitenansicht der Betätigungsvorrichtung 10 für den Dosier-Trichter 100 aus Figur 1. Die Betätigungsvorrichtung 10 besteht aus dem Handgriff 12 mit oberem und unterem Ende 12a, 12b sowie der Brücke 44, die außer zur Befestigung des Handgriffs 12 am Dosier-Trichter 100 zur Aufnahme eines Betätigungsmechanismus 20, der Stutzen 40 zur Aufbewahrung verschiedener Düsen 34a, b, c und der Befestigung der Betätigungsvorrichtung 10 auf der Auflage 104 des Dosier-Trichters 100 mit dem Pilzzapfen 36 sowie dem Gewindezapfen 38 mit Flügelschraube 30 dient.

Der eigentliche Betätigungsmechanismus 20 umfasst einen Hebel 22, der über das Schwenklager 26 mit der Brücke 44 verbunden ist. Der Hebel 22 weist ein Daumenteil 24 zur Betätigung des Hebels 22 mit dem Daumen der Hand, welche den Handgriff 12 umfasst, und ein Ende 28 auf, an dem eine Stange 50 zum Öffnen und Schließen der Ausgabeöffnung 14 des Dosier-Trichters 100 über ein Gewinde mit einer Kopfmutter 52 angebracht ist.

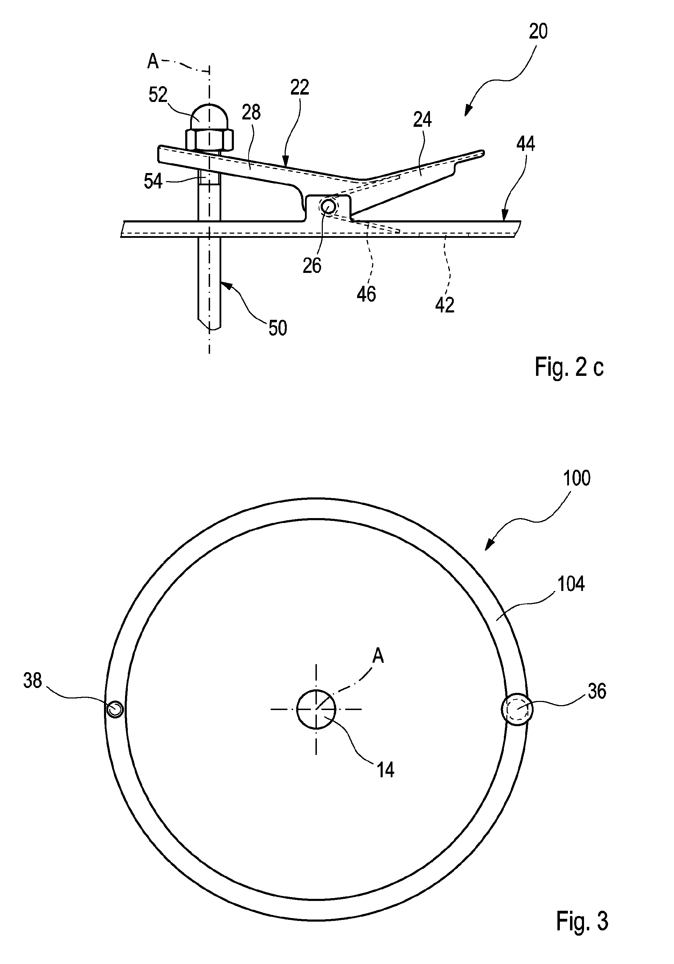

In Figur 2c ist ein Ausschnitt aus der Seitenansicht einer Betätigungsvorrichtung 10 für einen Dosier-Trichter 100 nach Figur 1 mit einer Schnittdarstellung durch das Rückstell-Federelement 46 zu sehen. Das Rückstell-Federelement 46 sorgt dafür, dass im nicht betätigten Zustand des Betätigungsmechanismus 20, wenn also der Hebel 22 nicht über das Daumenteil 24 niedergedrückt wird, die Stange 50 über den Verschluss 56 die Ausgabeöffnung 14 des Dosier-Trichters 100 verschlossen hält.

Figur 3 zeigt eine Draufsicht auf den Dosier-Trichter 100 nach Figur 1, in dem der konische Bereich des Trichterkörpers 102 mit der Auflage 104 dargestellt ist. In der Auflage 104 ist zum einen der Pilzzapfen 36 und zum anderen diagonal gegenüberliegend der Gewindezapfen 38 zur Befestigung der Betätigungsvorrichtung 10 über die Brücke 44 angebracht.

In der Mitte des konischen Bereichs des Trichterkörpers 102 mit axialem Abstand zur Auflage 104 am gegenüberliegenden Ende des Trichterkörpers 102 ist die Ausgabeöffnung 14 dargestellt.

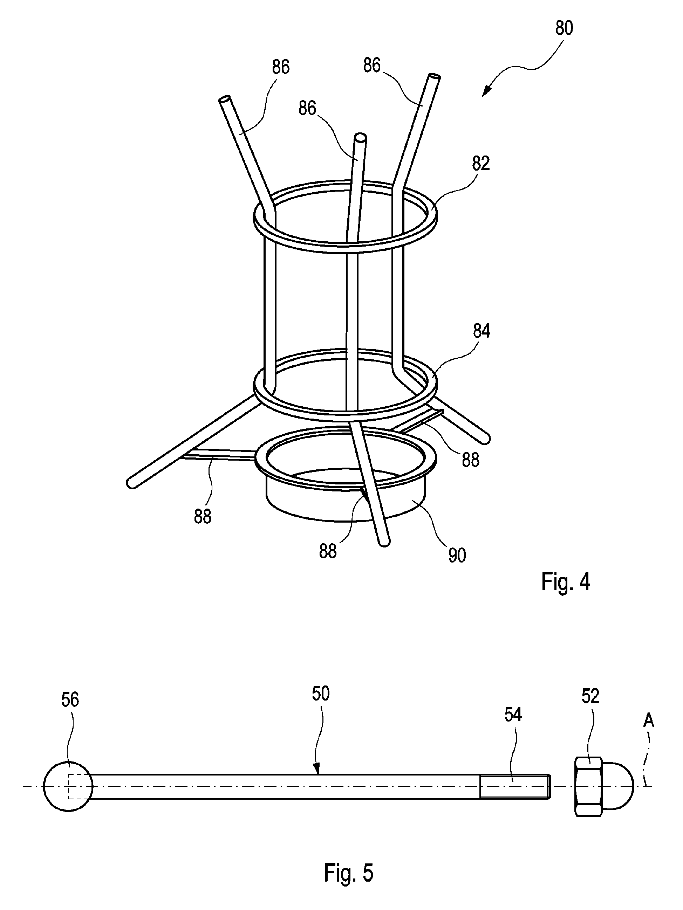

In Figur 4 ist die Gesamtansicht des Gestells 80 zum Abstellen des Dosier-Trichters 100 aus Figur 1 inklusive einer Abtropfschale 90 zu sehen. Das Gestell 80 besteht im wesentlichen aus zwei axial beabstandeten Ringen 82 und 84, an denen drei Streben 86 fest angebracht sind. Diese Streben 86 sind zum einen nach unten konisch auseinander laufend ausgebildet, was einen festen Stand des Gestells 80 auf einer Arbeitsunterlage ermöglicht. Zwischen den Ringen verlaufen die Streben 86 gerade. Weiter nach oben laufen die Streben 86 wieder konisch auseinander, um den konischen Trichterkörper 102 des Dosier-Trichters 100 sicher aufzunehmen und diesem einen festen Sitz zu verleihen.

Vom unteren Teil der Streben 86 sind Speichen 88 nach innen laufend angeordnet, um die Abtropfschale 90 lösbar und sicher aufzunehmen.

In Figur 5 ist ein Schnitt durch das Verschlussmittel des Dosier-Trichters 100 aus Figur 1 dargestellt, welches die Ausgabeöffnung 14 öffnet und schließt. Es besteht aus der Stange 50, an deren oberem Ende ein Gewinde 54 angebracht ist, auf das eine Kopfmutter 52 aufgeschraubt werden kann, welche eine Bewegung der Stange 50 in der entsprechenden Öffnung im Hebel 22 (Fig. 1) axial begrenzt und die Stange 50 sicher im Hebel 22 hält. Am unteren Ende der Stange 50 ist ebenfalls über ein Gewinde ein Verschluss 56 befestigt, beispielsweise eine Kugel, mit dem die Ausgabeöffnung 14 verschlossen werden kann.

Wie leicht zu erkennen ist, kann der Dosier-Trichter 100 und die Betätigungsvorrichtung 10 leicht in die einzelnen Bestandteile zerlegt werden, um etwa nach Benutzung hygienisch gereinigt zu werden.

## Patentansprüche

1. Betätigungsvorrichtung (10) für einen Dosier-Trichter (100), umfassend einen Handgriff (12) und einen Betätigungsmechanismus (20) mit einem Hebel (22) zum Öffnen und Schließen einer Ausgabeöffnung (14) des Dosier-Trichters (100), **dadurch gekennzeichnet, dass** der Handgriff (12) an einem Ende einer lösbar mit dem Dosier-Trichter (100) verbindbaren Brücke (44) angeordnet ist, welche sich im montierten Zustand über den Dosier-Trichter erstreckt (100) und der Betätigungsmechanismus (20) an der Brücke (44) lösbar gelagert ist.

2. Betätigungsvorrichtung nach Anspruch 1, **dadurch gekennzeichnet, dass** der Hebel (22) des Betätigungsmechanismus (20) auf ein Verschlussmittel (56) einwirkt, welches die Ausgabeöffnung (14) öffnet oder schließt, wobei der Hebel (22) mit einem Rückstell-Federelement (46) zusammenwirkt.

3. Betätigungsvorrichtung nach Anspruch 2, **dadurch gekennzeichnet, dass** das Rückstell-Federelement U-förmig ausgebildet ist, wobei das Federelement (46) mit seinem Mittelteil um eine Welle eines Schwenklagers (26) angeordnet ist und mit zwei Schenkeln zwischen Brücke (44) und Hebel (22) so angeordnet ist, dass der Hebel (22) bei einer Bewegung des Hebels (22) gegen die Federkraft der Schenkel bewegbar ist.

4. Betätigungsvorrichtung nach einem der vorhergehenden Ansprüche, **dadurch gekennzeichnet, dass** der Handgriff (12) ergonomisch ausgebildet ist und quer zu einer Trichterachse (A) unter einem Winkel zwischen 10° und 80° geneigt ausgerichtet ist.

5. Betätigungsvorrichtung nach einem der vorhergehenden Ansprüche, **dadurch gekennzeichnet, dass** die Brücke (44) eine erste Öffnung (32) und eine entfernte zweite Öffnung (42) zum Verbinden mit dem Dosier-Trichter (100) oder einer mit dem Dosier-Trichter (100) verbundenen separaten Auflage (104) aufweist.

6. Betätigungsvorrichtung nach Anspruch 5, **dadurch gekennzeichnet, dass** die erste Öffnung (42) ein Schlüsselloch ist und die zweite Öffnung (32) eine zu einer Seite der Brücke (44) offene Nut.

7. Betätigungsvorrichtung nach einem der vorhergehenden Ansprüche, **dadurch gekennzeichnet, dass** die Brücke (44) wenigstens einen Stutzen (40) zur Lagerung wenigstens einer Düse (34a, 34b, 34c) aufweist.

8. Betätigungsvorrichtung nach einem der vorhergehenden Ansprüche, **dadurch gekennzeichnet, dass** der Hebel (22) eine Stange (50) bewegt, an deren unterem Ende das Verschlussmittel (56) angeordnet ist.

9. Dosier-Trichter (100) mit einer Betätigungsvorrichtung (10) nach wenigstens einem der vorhergehenden Ansprüche, **dadurch gekennzeichnet, dass** die Betätigungsvorrichtung (10) am oberen Bereich (102a) des Trichterkörpers (102) gelagert ist und im unteren Bereich (102b) ein Verschlussmittel (56) der Betätigungsvorrichtung (10) eine Ausgabeöffnung (14) des Dosier-Trichters (100) öffnet oder schließt.

10. Dosier-Trichter nach Anspruch 9, **dadurch gekennzeichnet, dass** eine Auflage (104) zur Verbindung der Betätigungsvorrichtung (10) mit dem Trichterkörper (102) fest verbunden ist.

11. Dosier-Trichter nach Anspruch 9, **dadurch gekennzeichnet, dass** eine Auflage (104) zur Verbindung der Betätigungsvorrichtung (10) mit dem Trichterkörper (102) lösbar verbunden ist.

12. Dosier-Trichter nach einem der Ansprüche 9 bis 11, **dadurch gekennzeichnet, dass** ein Gewinde an der Ausgabeöffnung (14) zum Anschrauben einer Düse (34a, b, c) angebracht ist.

13. Handhabungssystem mit einem Dosier-Trichter (100) nach einem der Ansprüche 9 bis 12, **dadurch gekennzeichnet, dass** ein Gestell (80) zum Abstellen des Dosier-Trichters (100) vorgesehen ist, wobei beim Abstellen des Dosier-Trichters (100) in das Gestell (80) eine Ausgabeöffnung (14) des Dosier-Trichters (100) über einer Abtropfschale (90) positionierbar ist.

14. Handhabungssystem nach Anspruch 13, **dadurch gekennzeichnet, dass** Streben (86) des Gestells (80) sich nach oben erstrecken und ihren gegenseitigen Abstand nach außen vergrößern, so dass der Dosier-Trichter (100) in diesem Bereich des Gestells (80) von den Streben (86) stützbar ist.

15. Handhabungssystem nach Anspruch 13 oder 14, **dadurch gekennzeichnet, dass** die Abtropfschale (90) auf Speichen (88) des Gestells (80) ablegbar ist.
